# EUROPÄISCHE PATENTANMELDUNG

(11) **EP 1 085 510 A2**
(43) Veröffentlichungstag der Anmeldung: **21.03.2001**
(21) Anmeldenummer: 00119053.7
(22) Anmeldetag: 02.09.2000
(51) Int. Cl.: G11B 7/26, G11B 17/022

(54) **Drehantriebsvorrichtung für eine Prüfstation, insbesondere für DVD's**

(30) Priorität: 13.09.1999 DE 19943659
(71) Anmelder: Basler Aktiengesellschaft, 22926 Ahrensburg (DE)
(72) Erfinder: Kaupp, Ansgar, Dr., 22926 Ahrensburg (DE); Quarta, Steffen, 22926 Ahrensburg (DE); Wegner, Wolfgang, 22175 Hamburg (DE)
(74) Vertreter: Jaeschke, Rainer, Dipl.-Ing.

(57) **Zusammenfassung**

Die Erfindung betrifft eine Drehantriebsvorrichtung für eine Prüfstation zum Prüfen eines flachen Datenträgers, insbesondere einer CD, DVD, CD'R, der auf einem Fördermittel liegt und zu der Prüfstation transportiert und zum Prüfen von diesem gelöst und während des Prüfens um eine Achse senkrecht zur Flachseite gedreht und abgetastet wird. Gemäß der Erfindung wird vorgeschlagen, daß die Drehantriebsvorrichtung wenigstens eine axial fixierte und in Drehrichtung angetriebene Aufnahme für den Datenträger aufweist, die auf der Oberseite des Fördermittels angeordnet ist, daß gegenüber der Aufnahme auf der Unterseite des Fördermittels ein in Richtung auf die Aufnahme bewegliches Hubmittel auf der Unterseite des Fördermittels vorgesehen ist derart, daß das Hubmittel den Datenträger von unten erfaßt, von dem Fördermittel löst und in Richtung auf die Aufnahme bewegt, wobei die Aufnahme mit Haltemitteln versehen ist, die den Datenträger zumindest während des Prüfens in der Aufnahme halten. Das Lösen des Datenträgers vom Fördermittel erfolgt unabhängig von diesem, und die Drehbewegung kann dennoch mit hoher Genauigkeit spielfrei erfolgen.

## Beschreibung

Die Erfindung betrifft eine Drehantriebsvorrichtung für eine Prüfstation zum Prüfen eines flachen Gegenstands, wie einer CD, DVD, CD'R, der auf einem Fördermittel liegt und zu der Prüfstation transportiert und zum Prüfen von diesem gelöst und während des Prüfens um eine Achse senkrecht zu seiner Flachseite gedreht und abgetastet wird. Insbesondere betrifft die Erfindung eine Drehantriebsvorrichtung für eine Prüfstation, mit der optische Datenträger geprüft werden. Es ist daher im folgenden überwiegend von Datenträgern die Rede, ohne daß damit eine Beschränkung verbunden sein soll.

Optische Datenträger, insbesondere CD's, CD-R's oder DVD's werden in der Regel während oder nach dem laufenden Produktionsprozeß zu 100% geprüft. Die Datenträger liegen häufig nur mit der Schwerkraft auf einem zangenförmigen oder ringförmigen Fördermittel auf und werden von einer Bearbeitungsstation zur nächsten und auch zu der Prüfstation transportiert. In der Regel erfolgt die Prüfung eines solchen Datenträgers durch optische Abtastmittel von unten, von oben oder beidseitig, während der Datenträger um seine Mittelachse senkrecht zur Flachseite gedreht wird. Dazu ist es erforderlich, den Datenträger auf eine Drehantriebsvorrichtung der eingangs geschilderten Art zu positionieren, die eine derartige Drehung des Datenträgers durchführt.

Es ist bekannt, daß das Fördermittel eine Hubbewegung durchfährt, um den Datenträger auf eine axial feststehende Aufnahme der Drehantriebsvorrichtung zu legen. Solche Bewegungen des Fördermittels sind jedoch relativ aufwendig. Es ist aus der DE 196 08 562 A1 bekannt, die Aufnahme der Drehantriebsvorrichtung axial beweglich auszubilden, so daß der Datenträger vom Fördermittel angehoben und in ausgefahrener Position der Aufnahme gedreht und geprüft werden kann. Hiermit kann beispielsweise für CD's die Handlingszeit und somit die gesamte Prüfzeit reduziert werden, ohne daß das Fördermittel angepaßte Bewegungen durchführen muß. Allerdings hat sich gezeigt, daß im Zuge der immer höher werdenden Genauigkeit die axiale Führung in der ausgefahrenen Position auch bei sehr genauer Fertigung teilweise ein zu großes radiales Spiel aufweist, so daß Neigungs- und Krümmungsfehler für Datenträger höherer Dichte, wie DVD's, nicht hinreichend detektiert werden können.

Der Erfindung liegt die Aufgabe zugrunde, eine Drehantriebsvorrichtung der eingangs geschilderten Art so auszubilden, daß ein Lösen des Datenträgers unabhängig von dem Fördermittel erfolgt, ohne daß die Genauigkeit der Drehbewegung negativ beeinflußt wird.

Die Aufgabe wird gemäß der Erfindung dadurch gelöst, daß die Drehantriebsvorrichtung wenigstens eine axial fixierte und in Drehrichtung angetriebene Aufnahme für den Datenträger aufweist, die auf der Oberseite des Fördermittels angeordnet ist, daß gegenüber der Aufnahme auf der Unterseite des Fördermittels ein in Richtung auf die Aufnahme bewegliches Hubmittel auf der Unterseite des Fördermittels vorgesehen ist derart, daß das Hubmittel den Datenträger von unten erfaßt, von dem Fördermittel löst und in Richtung auf die Aufnahme bewegt. Dadurch ist es zum einen möglich, daß das Lösen des Datenträgers vom Fördermittel unabhängig von diesem erfolgt. Das Fördermittel braucht daher keine zusätzlichen Bewegungen auszuführen. Dennoch kann die Drehbewegung mit hoher Genauigkeit spielfrei erfolgen. Insbesondere ist es möglich, die axiale und radiale Lagerung der Aufnahme äußerst exakt auszubilden, so daß auch kleinste Verkippungen oder Verformungen des Datenträgers detektiert werden können. Das Hubmittel hingegen braucht nicht derart exakt geführt zu sein.

Grundsätzlich ist es möglich, daß das Hubmittel während der Prüfung in der ausgefahrenen Position bleibt und den Datenträger an der Aufnahme hält. Es ist jedoch zweckmäßig, wenn die Aufnahme mit Haltemitteln versehen ist, die den Datenträger zumindest während des Prüfens an der Aufnahme halten. Dadurch ist die Drehbewegung vollkommen unabhängig von dem Hubmittel, so daß eventuelle Beeinflussungen vermieden werden. Die Haltemittel können einen Flansch aufweisen, an dem der Datenträger mit seiner Flachseite von unten anliegt, und daß der Flansch wenigstens eine Öffnung aufweist, die mit einer Unterdruckquelle zusammenwirkt, um den Datenträger mit Unterdruck an der Aufnahme zu halten. Hierdurch wird ein ausreichender Halt des Datenträgers erreicht, zumal nur dessen Eigengewicht zu halten ist.

Es ist in jedem Fall zweckmäßig, wenn der Flansch einen relativ zum Datenträger geringen Durchmesser aufweist, um den zu prüfenden Bereich, insbesondere den Datenbereich und/oder den Ident-Codebereich einer CD, DVD oder CDR, nicht zu bedecken. Dadurch wird ein Abtasten der Oberseite möglich. Sofern das Hubmittel während des Prüfens sich in der eingefahrenen Position befindet, kann leicht auch die Unterseite des Datenträgers gleichzeitig vorgenommen werden.

Es ist zweckmäßig, wenn auch das Hubmittel einen Flansch aufweist, auf dem der Datenträger mit seiner Flachseite aufliegt und der einen relativ zum Datenträger geringen Durchmesser aufweist, um den zu prüfenden Bereich, insbesondere den Datenbereich und/oder den Ident-Codebereich einer CD, DVD oder CDR, nicht zu bedecken. Dann kann die Prüfung der Unterseite unabhängig von der Position des Hubmittels durchgeführt werden.

Für eine definierte Lage des optischen Datenträgers relativ zu den optischen Abtastmitteln ist es erforderlich, den in der Regel kreisrunden Datenträger zu zentrieren. Hierfür bietet sich das ohnehin zentrische Mittelloch einer CD, DVD oder CD-R an. Es ist daher vorgesehen, daß die Aufnahme einen von dem Flansch hervorragenden Zapfen aufweist, der in das zentrische Mittelloch des Datenträgers eingreift, um diesen zu zentrieren. Auch ist es zweckmäßig, wenn das Hubmittel eine Zentrierung aufweist. Hierdurch wird eine Zentrierung des Datenträgers bereits bei der Hubbewegung bewirkt.

Gemäß einer möglichen Ausführungsform ist vorgesehen, daß die Zentrierung des Hubmittels als versenkbarer Zapfen ausgebildet ist, der in das zentrische Mittelloch des Datenträgers paßt und von dem Zentrierzapfen der Aufnahme versenkt wird. Dadurch wird erreicht, daß der Datenträger für die Prüfung ausschließlich durch die genauere Zentrierung der Aufnahme ausgerichtet wird. Die Zentrierung des Hubmittels dient für eine exakte Übergabe des Datenträgers in die Aufnahme.

Das Hubmittel kann elastische und/oder stumpfe Gummiauflagen für den Datenträger aufweisen. Dadurch werden harte Berührungen vermieden, und der Datenträger wird sicher aufgenommen und während des Hubes gehalten.

Nach der Prüfung kann der Datenträger beispielsweise einfach auf das Fördermittel fallengelassen werden. Allerdings hängt dies vom tatsächlichen Abstand des Fördermittels von der Aufnahme ab. Grundsätzlich ist es aber zweckmäßig, wenn sich das Hubmittel nach dem Prüfen in Richtung auf die Aufnahme bewegt, um den Datenträger aufzunehmen und beim Einfahren auf das Fördermittel abzulegen. Dadurch wird erreicht, daß der Datenträger stets richtig auf dem Fördermittel aufliegt und eventuell in weiteren Schritten stets richtig erfaßt werden kann und nicht herunterfällt.

Die Erfindung wird im folgenden anhand der schematischen Zeichnung näher erläutert. Es zeigen:
- Fig. 1: eine Ansicht auf eine Prüfstation mit einer Drehantriebsvorrichtung gemäß der Erfindung in der eingefahrenen Ruheposition des Hubmittels und
- Fig. 2: eine Ansicht auf eine Prüfstation mit einer Drehantriebsvorrichtung in der ausgefahrenen Position des Hubmittels.

Die in der Zeichnung dargestellt Prüfstation für eine CD, DVD oder CD-R oder einen entsprechend ausgebildeten Datenträger 11 weist eine Drehantriebsvorrichtung 12 für den Datenträger auf. Mit dieser Drehantriebsvorrichtung wird der Datenträger während des optischen Prüfvorganges um seine Achse 13 senkrecht zu der Flachseite gedreht.

Die optischen Abtastmittel befinden sich dabei räumlich neben der Drehantriebsvorrichtung oberhalb und/oder unterhalb des zu prüfenden Datenträgers. In der Zeichnung können demnach die optischen Abtastmittel und die Beleuchtung über oder hinter der Zeichenebene angeordnet sein. Diese sind der Übersichtlichkeit halber jedoch nicht dargestellt. Es wird in der Regel ein Linienlicht erzeugt, das sich radial zumindest über den Datenbereich des optischen Datenträgers erstreckt. Bei einer solchen Anordnung ist es erforderlich, den Datenträger wenigstens einmal um seine Rotationsachse zu drehen, um den gesamten Datenbereich zu erfassen.

Es ist ein Fördermittel 14 vorgesehen, auf dem die Datenträger 11 mit ihrem Eigengewicht aufliegen und das die Datenträger taktweise zu der Prüfstation mit der Drehantriebsvorrichtung transportiert. Das Fördermittel 14 kann dazu zangenförmige oder ringförmige Haltearme 15 aufweisen, deren lichtes Maß geringfügig kleiner als das äußere Maß des Datenträgers ist. Durch das Fördermittel 14 werden die zu prüfenden Datenträger zunächst über bzw. unter der Drehantriebsvorrichtung positioniert.

Die Drehantriebsvorrichtung 12 weist eine Aufnahme 16 auf, die oberhalb des Fördermittels derart angeordnet ist, daß sich das Fördermittel frei darunter bewegen kann. Die Aufnahme ist an einem nicht gezeigten Rahmen oder in einem nicht gezeigten Gehäuse axial festgelegt und wird über einen nicht näher dargestellten Motor 17 angetrieben.

Die Aufnahme 16 umfaßt einen Flansch 18 und einen Zentrierzapfen 19, der exakt in das zentrische Mittelloch 20 des Datenträgers 11 paßt. Die dem Datenträger zugekehrte Oberfläche 21 der Aufnahme bildet die Referenzfläche und ist definiert zu den optischen Abtastmitteln ausgerichtet. Durch die axiale Festlegung kann eine sehr hohe Genauigkeit der Ausrichtung in axialer Richtung erreicht werden. Auch ist es möglich, eine stabile radiale Lagerung ohne Spiel vorzusehen, da die Aufnahme lediglich eine Drehbewegung durchführt.

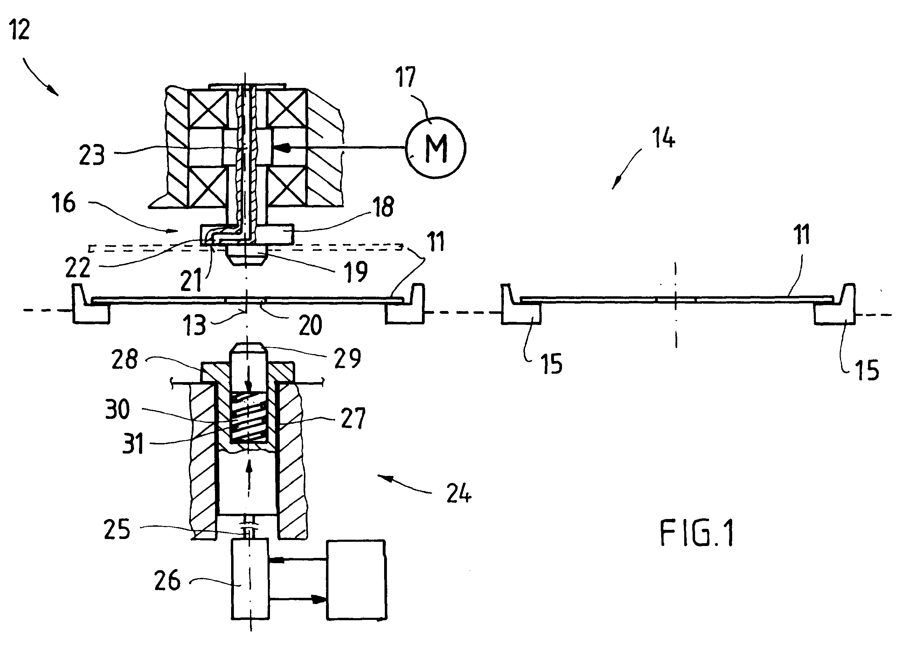

Im einzelnen ist die Anordnung so getroffen, daß die Oberfläche 21 des Flansches 18 mit einem, insbesondere aber oder mehreren, beispielsweise 12 oder 30 Löchern 22 versehen ist, die mit einer nicht gezeigten Unterdruckquelle über Bohrungen 23 in Verbindung stehen. Dadurch kann der Datenträger 11 frei, wie in der Fig. 1 gestrichelt dargestellt, an der Aufnahme 16 durch Unterdruck gehalten werden. Grundsätzlich können aber auch andere Haltemittel vorgesehen werden.

Zum Prüfen des Datenträgers befindet sich der Datenträger 11 in der gestrichelten Lage gemäß Fig. 1 an der Aufnahme 16. Die Aufnahme dreht sich, so daß beispielsweise der Datenbereich der Ober- und der Unterseite einer DVD gleichzeitig abgetastet werden kann.

Der Datenträger muß zur Prüfung an die Aufnahme gebracht werden. Es ist daher ein Hubmittel 24 vorgesehen, das auf der der Aufnahme 16 gegenüberliegenden Seite unterhalb des Fördermittels angeordnet ist. In der in Fig. 1 gezeigten Ruheposition ist das Hubmittel eingefahren und behindert das Fördermittel 14 nicht.

Sobald der Datenträger unter der Aufnahme positioniert ist, fährt das Hubmittel 24 aus. Im einzelnen ist die Anordnung so getroffen, daß eine Kolbenstange 25 eines Pneumatik- oder Hydraulikzylinders 26 ausfährt. Die Kolbenstange ist mit einem Hubkolben 27 verbunden, der axial in dem nicht gezeigten Rahmen oder Gehäuse geführt ist. Der Hubkolben kann auch drehbar sein. Der Hubkolben ist auf seiner der Aufnahme zugekehrten Seite mit einem Auflagenflansch 28 für den Datenträger 11 und einem Zapfen 29 versehen, der in das Mittelloch 20 paßt. Der Auflageflansch 28 und der Flansch 18 der Aufnahme 16 sowie der Zentrierzapfen 19 und der Zapfen 29 sind hierbei axial exakt fluchtend entlang der Mittelachse 13 ausgerichtet.

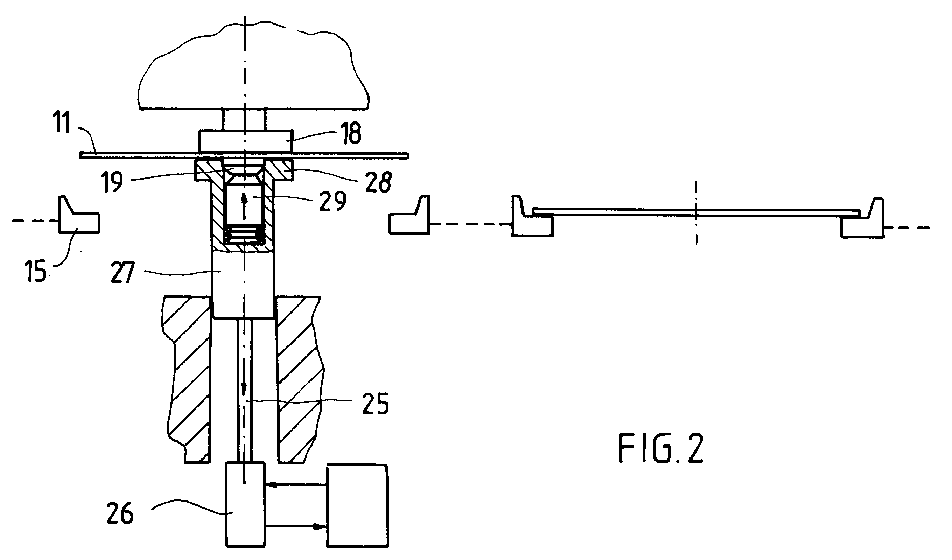

Die Anordnung ist weiterhin so getroffen, daß der Zapfen 29 in dem Hubkolben versenkbar ausgebildet ist, so daß bei Berührung des Zapfens 29 mit dem Zentrierzapfen 19 der Aufnahme der Zapfen 29 in eine entsprechende Ausnehmung 30 des Hubkolbens geschoben wird. Der Datenträger 11 wird somit zentriert und sicher über den Zentrierzapfen 19 der Aufnahme 16 geschoben. Diese ausgefahren Position ist in Fig. 2 gezeigt. Der Zapfen 29 ist elastisch durch eine Feder 31 gelagert, so daß er bei Freigabe in seine ausgefahrene Position zurückkehrt.

Es kann vorgesehen werden, daß der Hubkolben 28 während des Prüfens des Datenträgers in dieser ausgefahrenen Position bleibt. In diesem Fall könnte auf die Unterdruckbohrungen und -löcher 23, 22 in der Aufnahme 16 verzichtet werden. Der Hubkolben ist dann drehbar gelagert und hält den Datenträger an der Aufnahme 16. Es kann aber auch vorgesehen werden, daß der Hubkolben während des Drehens zumindest teilweise eingefahren wird.

Es ist offensichtlich, daß hierdurch eine Drehantriebsvorrichtung für eine Prüfstation zum Prüfen von optischen Datenträgern bereitgestellt wird, die unabhängig von der Art und Bewegungsmöglichkeit des Fördermittels arbeiten kann. Es ist lediglich erforderlich, daß das Fördermittel den Datenträger hinreichend exakt mit dem Mittelloch über den Zapfen 29 bzw. unter den Zentrierzapfen 19 positioniert und das der Datenträger frei aufliegt. Die Aufnahme ist bezüglich ihrer axialen Referenzfläche exakt ausgerichtet und axial festgelegt und kann radial ohne Spiel gelagert sein. Somit ist es möglich, auch Datenträger mit hohen Anforderungen hinsichtlich der Oberflächenausbildung optisch abzutasten und zu prüfen.

## Patentansprüche

1. Drehantriebsvorrichtung für eine Prüfstation zum Prüfen eines flachen Datenträgers 11, insbesondere einer CD, DVD, CD'R, der auf einem Fördermittel (14) liegt und zu der Prüfstation transportiert und zum Prüfen von diesem gelöst und während des Prüfens um eine Achse (13) senkrecht zur Flachseite gedreht und abgetastet wird, dadurch gekennzeichnet, daß die Drehantriebsvorrichtung wenigstens eine axial fixierte und in Drehrichtung angetriebene Aufnahme (16) für den Datenträger aufweist, die auf der Oberseite des Fördermittels angeordnet ist, daß gegenüber der Aufnahme auf der Unterseite des Fördermittels ein in Richtung auf die Aufnahme bewegliches Hubmittel (24, 27) auf der Unterseite des Fördermittels vorgesehen ist derart, daß das Hubmittel den Datenträger von unten erfaßt, von dem Fördermittel löst und in Richtung auf die Aufnahme (16) bewegt.

2. Drehantriebsvorrichtung nach Anspruch 1, dadurch gekennzeichnet, daß die Aufnahme mit Haltemitteln versehen ist, die den Datenträger unabhängig vom Hubmittel zumindest während des Prüfens an der Aufnahme halten.

3. Drehantriebsvorrichtung nach Anspruch 1 oder 2, dadurch gekennzeichnet, daß die Haltemittel einen Flansch (18) aufweisen, an dem der Datenträger mit seiner Flachseite anliegt, und daß der Flansch wenigstens eine Öffnung (22) aufweist, die mit einer Unterdruckquelle zusammenwirkt, um den Datenträger mit Unterdruck an der Aufnahme zu halten.

4. Drehantriebsvorrichtung nach Anspruch 1 bis 3, dadurch gekennzeichnet, daß der Flansch (18) einen relativ zum Datenträger geringen Durchmesser aufweist, um den zu prüfenden Bereich, insbesondere den Datenbereich und/oder den Ident-Codebereich einer CD, DVD oder CDR, nicht zu bedecken.

5. Drehantriebsvorrichtung nach einem der Ansprüche 1 bis 4, dadurch gekennzeichnet, daß die Aufnahme einen von dem Flansch (18) hervorragenden Zapfen (19) aufweist, der in ein zentrisches Mittelloch (20) des Datenträgers (11) eingreift, um diesen zu zentrieren.

6. Drehantriebsvorrichtung nach einem der Ansprüche 1 bis 5, dadurch gekennzeichnet, daß das Hubmittel (24, 27) eine Zentrierung (29) aufweist.

7. Drehantriebsvorrichtung nach einem der Ansprüche 1 bis 6, dadurch gekennzeichnet, daß die Zentrierung des Hubmittels als versenkbarer Zapfen (29) ausgebildet ist, der in das zentrische Mittelloch (20) des Datenträgers paßt und von dem Zentrierzapfen (19) der Aufnahme (16) versenkt wird.

8. Drehantriebsvorrichtung nach einem der Ansprüche 1 bis 7, dadurch gekennzeichnet, daß das Hubmittel elastische Gummiauflagen für den Datenträger aufweist.

9. Drehantriebsvorrichtung nach einem der Ansprüche 1 bis 8, dadurch gekennzeichnet, daß das Hubmittel einen Flansch (28) aufweist, auf dem der Datenträger mit seiner Flachseite aufliegt und der einen relativ zum Datenträger geringen Durchmesser aufweist, um den zu prüfenden Bereich, insbesondere den Datenbereich und/oder den Ident-Codebereich einer CD, DVD oder CDR, nicht zu bedecken.

10. Drehantriebsvorrichtung nach einem der Ansprüche 1 bis 9, dadurch gekennzeichnet, daß das Hubmittel während des Prüfens zumindest teilweise abgesenkt ist.

11. Drehantriebsvorrichtung nach einem der Ansprüche 1 bis 10, dadurch gekennzeichnet, daß sich das Hubmittel nach dem Prüfen in Richtung auf die Aufnahme bewegt, um den Datenträger aufzunehmen und auf das Fördermittel abzulegen.

12. Drehantriebsvorrichtung nach einem der Ansprüche 1 bis 9, dadurch gekennzeichnet, daß das Hubmittel während des Prüfens ausgefahren ist und den Datenträger gegen die Aufnahme drückt und dort hält.
